# EUROPEAN PATENT APPLICATION

(11) **EP 1 975 055 A1**
(43) Date of publication of application: **01.10.2008**
(21) Application number: 07006565.1
(22) Date of filing: 29.03.2007
(51) Int. Cl.: B62K 25/28

(54) **Bicycle frame**

(71) Applicant: MERIDA INDUSTRY CO., LTD., Meikang Village, Tatsun Hsiang, Changhua Hsien (TW)
(72) Inventor: Tseng, Ting-Huang, Changhua Hsien Taiwan (TW)
(74) Representative: Schildberg, Peter

(57) **Abstract**

A bicycle frame has a front frame (10), a mounting assembly (30), a rear frame (20) and a shock absorber (40). The front frame (10) has a head tube (12), a down tube (15), a top tube (11), a bottom bracket shell (14) and a seat tube (13). The seat tube (13) is connected to bottom bracket shell (14), is connected to the top tube (11) and has an upper bracket seat (132), a connecting bracket (134) and a lower bracket seat (136). The mounting assembly (30) is connected pivotally to the front frame (10) and has two mounting brackets (31). The rear frame (20) is connected pivotally to the mounting assembly (30) and front frame (10) and has an upper fork (21), a lower fork (22) and two dropouts (23). The shock absorber (40) is connected to the front frame (10) and the mounting assembly (30).

## Description

### 1. Field of the Invention

The present invention relates to a frame, and more particularly to a frame for a bicycle that has a shock absorber to provide a smooth operation.

### 2. Description of Related Art

Conventional bicycle frames with a shock absorbing capability has a front frame, a rear frame and a shock absorber. The shock absorber is attached pivotally to the front frame and the rear frame to provide a shock absorbing capability between the front frame and the rear frame.

However, the conventional bicycle frame can provide a shock absorbing capability, but the shock absorbing capability of the conventional bicycle frame is limited, and this cannot provide the conventional bicycle frame to fit with all kinds of the rugged and rough grounds. In addition, the shock absorbing capability of the conventional bicycle frame isn't well enough to absorb the shock from the ground, and this will influence the safety and the comfortability of riding the bicycle.

To overcome the shortcomings, the present invention provides a bicycle frame to mitigate or obviate the aforementioned problems.

The main objective of the present invention is to provide a bicycle frame with a shock absorber that provides a smooth operation.

The bicycle frame in accordance with the present invention has a front frame, a mounting assembly, a rear frame and a shock absorber. The front frame has a head tube, a down tube, a top tube, a bottom bracket shell and a seat tube. The seat tube is connected to bottom bracket shell, is connected to the rear end of the top tube and has an upper bracket seat, a connecting bracket and a lower bracket seat. The mounting assembly is connected pivotally to the front frame and has two mounting brackets. The rear frame is connected pivotally to the mounting assembly and front frame and has an upper fork, a lower fork and two dropouts. The shock absorber is connected to the front frame and the mounting assembly.

Other objectives, advantages and novel features of the invention will become more apparent from the following detailed description when taken in conjunction with the accompanying drawings.
**IN THE DRAWINGS:**
Fig. 1 is a perspective view of a bicycle frame in accordance with the present invention;
Fig. 2 is an exploded perspective view of the bicycle frame in Fig. 1;
Fig. 3 is a side view of the bicycle frame in Fig. 1;
Fig. 4 is an operational side view of the bicycle frame in Fig. 1; and
Fig. 5 is another operational side view of the bicycle frame in Fig. 1.

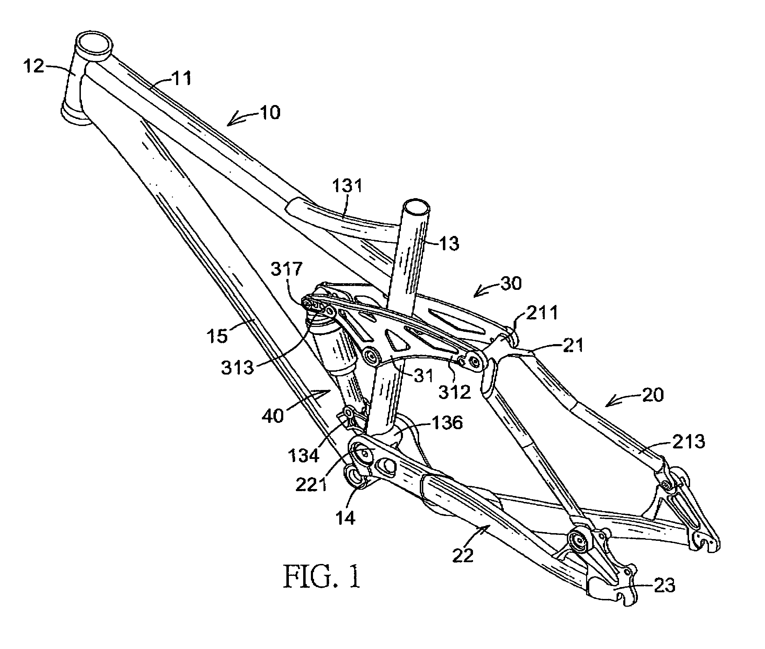

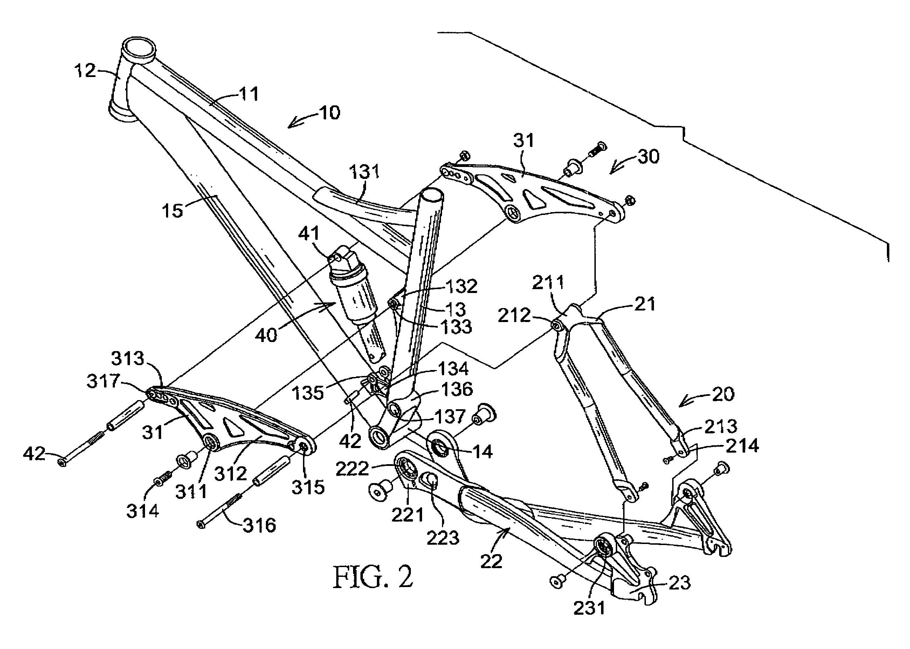

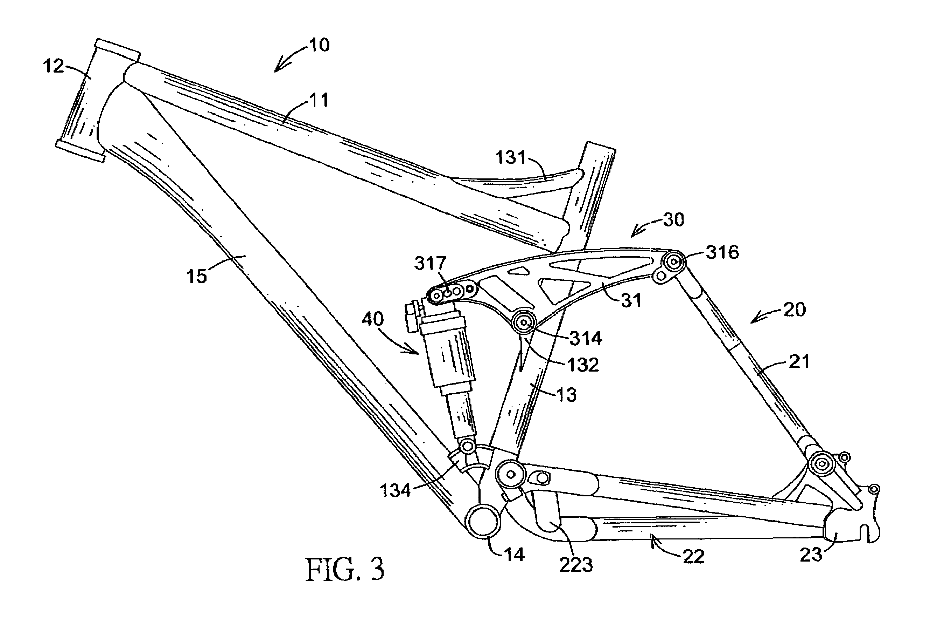

With reference to Figs. 1 to 3, a bicycle frame in accordance with the present invention comprises a front frame (10), a mounting assembly (30), a rear frame (20) and a shock absorber (40).

The front frame (10) has a front, a rear, a head tube (12), a down tube (15), a top tube (11), a bottom bracket shell (14) and a seat tube (13).

The head tube (12) is formed at the front of the front frame (10).

The down tube (15) is connected to and protrudes at an angle down from the head tube (12) toward the rear of the front frame (10) and has a bottom end.

The top tube (11) is substantially horizontal, is connected to and protrudes substantially horizontally from the head tube (12) toward the rear of the front frame (10) and has a rear end.

The bottom bracket shell (14) is connected transversally to the bottom end of the down tube (15) and has a top.

The seat tube (13) is connected to and protrudes up from the bottom bracket shell (14), is connected to the rear end of the top tube (11) and has an upper end, a lower end, a connecting stay (131), an upper bracket seat (132), a connecting bracket (134) and a lower bracket seat (136). The connecting stay (131) is formed on and protrudes forward from the seat tube (13) near the upper end and is connected to the top tube (11). The upper bracket seat (132) is formed on and protrudes forward from the seat tube (13) and has two sides and an upper pivot hole (133). The upper pivot hole (133) is formed transversally through the sides of the upper bracket seat (132). The connecting bracket (134) is formed on the seat tube (13), is connected to the down tube (15) over the bottom bracket shell (14) and has two sides and two connecting holes (135). The connecting holes (135) are respectively formed through the sides of the connecting bracket (134) and align with each other. The lower bracket seat (136) is formed on and protrudes forward from the seat tube (13) between the connecting bracket (134) and the bottom bracket shell (14) and has two sides and a lower pivot hole (137). The lower pivot hole (137) is formed transversally through the sides of the lower bracket seat (136).

The mounting assembly (30) is connected pivotally to the front frame (10) and has two mounting brackets (31). The mounting brackets (31) may be triangular and are connected pivotally to the seat tube (13), and each mounting bracket (31) has a front end, a rear end, a through hole (311), two first fastener (314), a rear arm (312), a connecting hole (315), two second fasteners (316), a front arm (313) and multiple mounting holes (317).

The through holes (311) are respectively formed through the mounting brackets (31) and are aligned with the upper pivot hole (133) of the upper bracket seat (132).

The first fasteners (314) extend through the through holes (311) in the mounting brackets (31) and the upper pivot hole (133) in the upper bracket seat (132) to connect the mounting brackets (31) to the seat tube (13).

The rear arms (312) are formed respectively at the rear ends of the mounting brackets (31).

The connecting holes (315) are respectively formed through the rear arms (312) of the mounting brackets (31).

The second fasteners (316) extend through the connecting holes (315) in the rear arms (312).

The front arms (313) are formed respectively at the front ends of the mounting brackets (31).

The mounting holes (317) are formed respectively through the front arms (313) of the mounting brackets (31).

The rear frame (20) is connected pivotally to the mounting assembly (30) and the front frame (10) and has an upper fork (21), a lower fork (22) and two dropouts (23).

The upper fork (21) is connected to the rear mounting bracket (32) and has a top end (211) and two bottom ends (213). The top end (211) is connected pivotally to the rear arms of the mounting brackets (31) and has two sides and a pivot hole (212). The pivot hole (212) is formed transversally through the sides of the top end (211) and is aligned with the connecting holes (315) in the mounting brackets (31). The second fasteners (316) respectively extend through the connecting holes (315) in the mounting brackets (31) and the pivotal hole (212) in the top end (211) to connect the upper fork (21) with the mounting brackets (31). The bottom ends (213) are formed respectively with the top end (211) and parallel to each other, and each bottom end (213) has a through hole (214). The through holes (214) are respectively formed through the bottom ends (213).

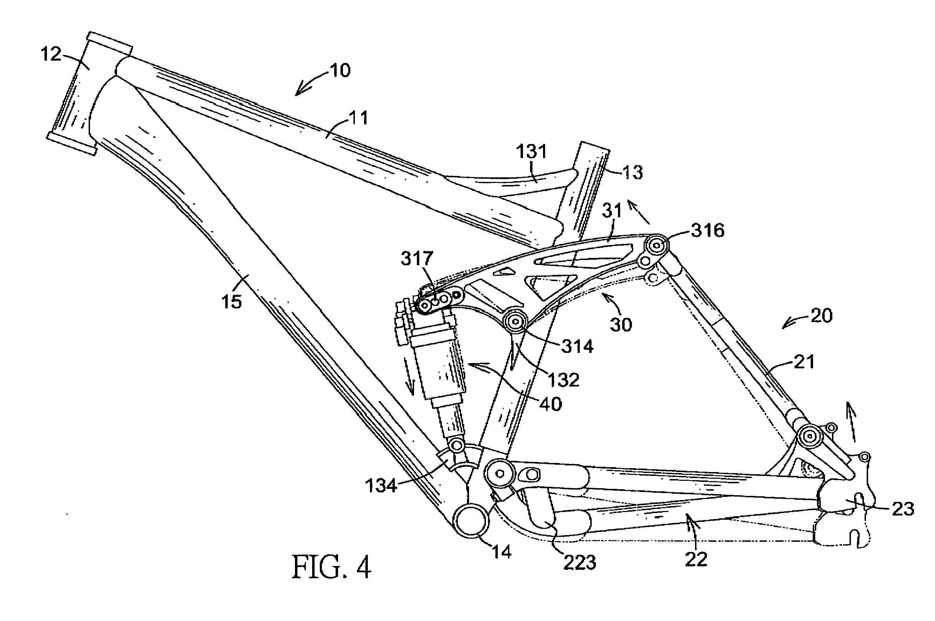

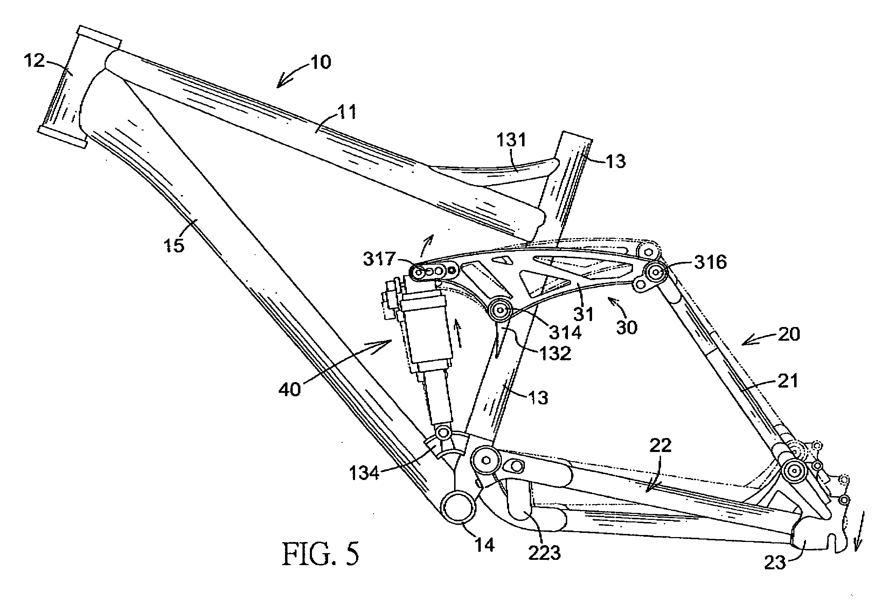

With further reference to Figs. 4 and 5, when a shock is applied to the rear frame (20), the upper fork (21) will pivot the mounting brackets (31) relative to the front frame (10).

The lower fork (22) is connected pivotally to the seat tube (13) and has two chainstays (221) and a cross member (223). The chainstays (221) are parallel to each other and are connected to the lower bracket seat (136) of the seat tube (13), and each chainstay (221) has a front end, a rear end and a pivot hole (222). The pivot holes (222) are formed through the front ends of the chainstays (221) and are aligned with the lower pivot hole (137) of the lower bracket seat (136). The cross member (223) is connected between the front ends of the chainstays (221),

The dropouts (23) are respectively mounted on the rear ends of the chainstays (221) of the lower fork (22) and are connected pivotally to the bottom ends (213) of the upper fork (21) and each dropout (23) has a central hole (231). The central holes (231) are formed through the dropouts (23)and are respectively aligned with the through holes (214) in the bottom ends (213) of the upper fork (21).

The shock absorber (40) is mounted pivotally to the front frame (10) and the mounting assembly (30) between the connecting bracket (134) and the mounting brackets (31) and has an upper end, a lower end, a mounting hole (41) and two fasteners (42). The upper end of the shock absorber (40) is attached to the rear arms (313) of the mounting brackets (31). The mounting hole (41) is formed through the upper end of the shock absorber (40), and is aligned with the mounting holes (317) of the mounting brackets (31). One of the fasteners (42) extends through the mounting hole (411) in the shock absorber (40) and the corresponding mounting holes (317) in the mounting brackets (31) to connect the shock absorber (40) with the mounting brackets (31). The other fastener (42) extends through the lower end of the shock absorber (40) and the connecting holes (135) in the connecting bracket (134) to connect the shock absorber (40) with the connecting bracket (134).

With reference to Figs. 4 and 5, the shock absorber (40) is mounted pivotally between the front frame (10) and the mounting assembly (30), a shock applied to the rear frame (20) causes the rear frame (20) to move up. With the movement of the rear frame (20), the mounting brackets (31) are pivoted and the shock absorber (410) are simultaneously compressed to absorb the shock from the ground.

The bicycle frame as described has the following advantages.
1. The bicycle frame in accordance with the present invention can provide an excellent shock absorbing capability to fit with the rugged and rough grounds with the shock absorber (40).
2. The bicycle frame with the shock absorber (40) can improve the shock absorbing capability of the bicycle frame, and this can make a rider riding the bicycle frame safely and comfortably.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A frame for a bicycle having
a front frame (10) having
a front;
a rear;
a head tube (12) being formed at the front of the front frame (10);
a down tube (15) being connected to and protruding at an angle down from the head tube (12) toward the rear of the front frame (10) and having a bottom end;
a top tube (11) being connected to and protruding from the head tube (12) toward the rear of the front frame (10) and having a rear end;
a bottom bracket shell (14) being connected transversally to the bottom end of the down tube (15) and having a top; and
a seat tube (13) being connected to and protruding up from the bottom bracket shell (14) and being connected to the rear end of the top tube (11) and having
an upper end;
a lower end;
an upper bracket seat (132) being formed on and protruding forward from the seat tube (13);
a connecting bracket (134) being formed on the seat tube (13) and being connected to the down tube (15) over the bottom bracket shell (14); and
a lower bracket seat (136) being formed on and protruding forward from the seat tube (13) between the connecting bracket (134) and the bottom bracket shell (14);
a mounting assembly (30) being connected pivotally to the front frame (10) and having two mounting brackets (31) connected pivotally to the upper bracket seat (132) of the seat tube (13) and each mounting bracket (31) having
a front end;
a rear end;
a through hole (311) being formed through the front mounting bracket (31) between the front end and the rear end, being aligned with the upper bracket seat (132);
a rear arm (312) being formed respectively at the rear end of the front mounting bracket (31); and
a front arm (313) being formed at the front end of the front mounting bracket (31);
a rear frame (20) being connected pivotally to the mounting assembly (30) and the front frame (10) and having
an upper fork (21) being connected to the rear mounting bracket (32) and having
a top end (211) being connected pivotally to the rear mounting bracket (32); and
two bottom ends (213) parallel to each other;
a lower fork (22) being connected pivotally to the seat tube (13) and having two chainstays (221) parallel to each other and being connected to the lower bracket seat (136) of the seat tube (13); and
two dropouts (23) being respectively mounted on the chainstays (221) of the lower fork (22)and being connected pivotally to the bottom ends (213) of the upper fork (21); and
a shock absorber (40) being connected to the front frame (10) and mounting assembly (30) between the connecting bracket (134) and the mounting brackets (31).

2. The bicycle frame as claimed in claim 1, wherein
the connecting bracket (134) having
two sides; and
two connecting holes (135) being respectively formed through the sides of the connecting bracket (134) and aligning with each other;
the mounting bracket (31) has multiple mounting holes (317) being formed respectively through the front arms (313) of the mounting brackets (31); and
the shock absorber (40) has
an upper end being attached to the rear arms (313) of the mounting brackets (31);
a lower end;
a mounting hole (41) being formed through the upper end of the shock absorber (40) and being aligned with the mounting holes (317) of the mounting brackets (31); and
two fasteners (42), wherein one of the fasteners (42) extends through the mounting hole (411) in the shock absorber (40) and the mounting holes (317) in the mounting brackets (31), and the other fastener extends through the lower end of the first shock absorber (40) and the connecting holes (135) in the connecting bracket (134).

3. The bicycle frame as claimed in claim 2, wherein
each mounting bracket (31) has
a connecting hole (315) being formed through the rear arms (312) of the mounting brackets (31); and
two second fasteners (316) extending through the connecting holes (315) in the rear arms (312); and
the top end (211) of the upper fork (21) has
two sides; and
a pivot hole (212) being formed transversally through the sides of the top end (211) and being aligned with the connecting holes (315) in the mounting bracket (31), and the second fasteners (316) respectively extending through the connecting holes (315) in the mounting bracket (31) and the pivotal hole (212) in the top end (211).

4. The bicycle frame as claimed in claim 3, wherein
the upper bracket seat (132) has
two sides; and
an upper pivot hole (133) being formed transversally through the sides of the upper bracket seat (132); and
each front mounting bracket (31) has two first fasteners (314) extending through the through holes (311) in the mounting brackets (31) and the upper pivot hole (133) in the upper bracket seat (132) to connect the mounting brackets (31) to the seat tube (13).

5. The bicycle frame as claimed in claim 4, wherein
the lower bracket seat (136) having
two sides; and
a lower pivot hole (137) being formed transversally through the sides of the lower bracket seat (136); and
each chainstay (221) of the lower fork (22) has
a front end;
a rear end; and
a pivot hole (222) being formed through the front end of the chainstay (221) and being aligned with the lower pivot hole (137) of the lower bracket seat (136).

6. The bicycle frame as claimed in claim 5, wherein
each bottom end (213) of the upper fork (21) has a through hole (214) being formed through the bottom ends (213); and
each dropout (23) has a central hole (231) being formed through the dropout (23) and being aligned with the through hole (214) in a corresponding bottom end (213) of the upper fork (21).

7. The bicycle frame as claimed in claim 6, wherein the lower fork (22) has a cross member (223) being connected between the front ends of the chainstays (221).

8. The bicycle frame as claimed in claim 7, wherein the seat tube (13) has a connecting stay (131) being formed on and protruding forward from the seat tube (13) near the upper end and being connected to the top tube (11).

9. The bicycle frame as claimed in claim 8, wherein the mounting brackets (31) are triangular.

10. The bicycle frame as claimed in claim 1, wherein
the upper bracket seat (132) has
two sides; and
an upper pivot hole (133) being formed transversally through the sides of the upper bracket seat (132); and
each front mounting bracket (31) has two first fasteners (314) extending through the through holes (311) in the mounting brackets (31) and the upper pivot hole (133) in the upper bracket seat (132) to connect the mounting brackets (31) to the seat tube (13).
